# EUROPEAN PATENT APPLICATION

(11) **EP 0 795 458 A1**
(43) Date of publication of application: **17.09.1997**
(21) Application number: 97103885.6
(22) Date of filing: 07.03.1997
(51) Int. Cl.: B62D 25/18

(54) **Shielding device for a vehicle mudguard**

(30) Priority: 12.03.1996 GB 9605199
(71) Applicant: Strong, Nicholas Maxwell, Birmingham, B45 8HE (GB); Strong, Godfrey, Birmingham B45 8HX (GB)
(72) Inventor: Strong, Nicholas Maxwell, Birmingham, B45 8HE (GB); Strong, Godfrey, Birmingham B45 8HX (GB)
(74) Representative: Dodd, Graham Marshall

(57) **Abstract**

A shielding device for a wheel of a vehicle, comprising an attachment portion adapted to be secured to an edge of a mudguard for the wheel and a shield portion extending from the attachment portion and arranged to inhibit spray emission laterally at an upper part of the wheel while providing clearance permitting steering movement of the wheel.

## Description

This invention relates to a shielding device for a wheel of a vehicle, for reducing the amount of spray raised thereby when the vehicle is travelling in wet conditions. The invention has been devised primarily, although not exclusively, for a steerable wheel of a motor vehicle.

Spray caused by vehicles, particularly by commercial vehicles, is a significant driving hazard on motorways and fast roads. Most of such spray is raised by the wheels of vehicles, and the problem is particularly acute in the case of commercial vehicles which have large sizes of wheel, large numbers of wheels, and in many cases mudguards which do not extend sufficiently close to the wheels, nor cover a sufficient part of each wheel, satisfactorily to contain spray. Expedients such as providing the edges of mudguards with brush formations or the like for spray containment are not wholly successful.

A particular problem arises in respect of the front wheels of a vehicle. Because they are steerable, there must be sufficient clearance between wheel and mudguard for the steering movement of the wheel not to be inhibited. The clearance must allow for maximum steering movement of the wheel in both directions, under both maximum jounce and rebound conditions of the vehicle's suspension.

It is broadly the object of the present invention to provide a shielding device which is usable in association with the steerable wheels of a vehicle or non-steerable wheels thereof, and overcomes or reduces the problem of spray emission thereby without inhibiting steering movement if such movement is required.

According to one aspect of the present invention, we provide a shielding device for a wheel of a vehicle, the device comprising an attachment portion adapted to be secured to an edge of a mudguard of the wheel and a shield portion extending from the attachment portion and adapted to inhibit lateral emission of spray at an upper part of the wheel whilst providing clearance for steering movement of the wheel.

According to another aspect of the invention, we provide a motor vehicle having a shielding device in accordance with the first aspect of the invention secured to a mudguard of a wheel of the vehicle.

Preferably the wheel is a steerable wheel.

Preferably the shield portion comprises a lower edge which does not extend lower than a line such that when the wheel is in at least a mid-region of its range of travel upwards and downwards relative to the vehicle, and preferably its highest (maximum jounce) position, steering movement of the wheel is not inhibited by the shield portion.

Preferably the shield portion of the device comprises a lower edge, of which edge a central portion lies generally level with ( or possibly slightly above, or even slightly below if steering movement is not thereby inhibited) an upper part of the periphery of the wheel, when the wheel is in a position in the mid-region of its permitted upwards and downwards movement relative to the vehicle structure. End portions of said lower edge may then provide a progressively increasing clearance from the periphery of the wheel with increasing distance from said central portion.

Preferably said lowermost edge of the shield portion is generally arcuate in said central portion having a radius of curvature generally the same as the radius of the wheel, and is of increasing radius of curvature towards said end portions.

Preferably the shield portion of the device is offset from the attachment portion thereof, so as to be spaced laterally outwardly of the vehicle from the edge of the vehicle's mudguard. By way of example, the shield portion may lie about 10-50mm outwardly of the edge of the mudguard.

Preferably said lower edge of the shield portion of the device includes a water-collecting formation e.g. an inturned lip or a channel, for collection of water draining down the interior of the shield portion.

Preferably the water-collecting formation at the lower edge of the shield portion of the device is arranged to finish at end portions of the device respectively forwardly and rearwardly of the periphery of the wheel of a vehicle, so that water draining from the ends of such formation is less likely to contact the periphery of the wheel.

Preferably the attachment portion of the device comprises a flange formation which lies in face-to-face relation with a surface facing laterally outwardly of the vehicle or an inwardly directed flange at the edge of the mudguard, and is secured thereto by use of appropriate fasteners. For example, quick release fasteners, e.g. of the kind requiring only a quarter turn of a fastening element, may be utilised, although it would be possible to use simple nuts and bolts or other fasteners passed through appropriately positioned apertures in the attachment portion of the device and the flange at the edge of the mudguard.

The device preferably is made of a deformable but shape-restoring material, eg a plastics or rubber-like material.

When we refer herein to "a mudguard" it is to be understood that in many vehicles the steerable wheels are not protected by mudguards which are identifiable as separate components, but instead a part or parts which serve as mudguards are incorporated in or form part of a body and/or chassis structure of the vehicle. For example, in the case of a heavy commercial vehicle, all or part of the mudguards for the steerable front wheels of the vehicle might be incorporated in the structure of the cab of the vehicle. It is to be understood that in referring to a device according to the invention being secured or adapted to be secured to a mudguard, we mean to include such integral or partly integral types of mudguard.

Further it is to be understood that when we refer to "vehicle" herein, we mean to include both powered and unpowered vehicles, the latter including both trailers and semi-trailers.

The invention will now be described by way of example with reference to the accompanying drawings, of which:-
Figure 1 is a side view of an example of a vehicle to which the invention may be applied;
Figure 2 is a side elevation of a wheel of the vehicle with a shielding device in accordance with the invention applied thereto;
Figure 3 is a diagrammatic section on the line 3-3 of Figure 2;
Figures 4, 5, 6 and 7 are respectively a perspective view, side elevation, plan, and section through the shielding device in accordance with the invention.

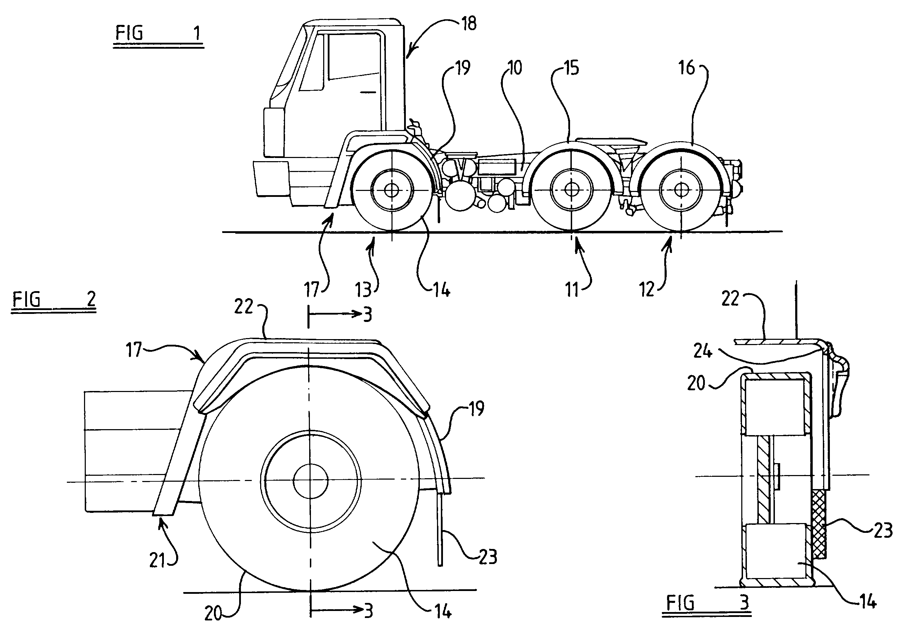

Referring firstly to Figure 1 of the drawings, this shows a typical heavy commercial vehicle which is a tractor unit for drawing a semi-trailer. The vehicle has a chassis indicated generally at 10 and three axles namely two rear axles indicated generally at 11, 12 carrying drivable but non-steerable wheels and a front axle 13 carrying steerable wheels of which the left hand such wheel is indicated at 14. The rear, drivable, wheels of the vehicle are protected by mudguards 15, 16 connected to the vehicle chassis 10 and the front wheels are protected by respective mudguard assemblies of each of which, as indicated for the wheel 14, a front portion 17 forms part of the structure of a cab 18 of the vehicle and a rear portion 19 is carried by the vehicle chassis 10.

The wheel 14 is shown in greater detail in Figures 2 and 3. The periphery of the tyre on the wheel is indicated at 20. It will be appreciated that the axle by which the wheel is carried is connected to the vehicle by way of a suspension system enabling the wheel to move upwardly and downwardly relative to the chassis of the vehicle and other parts fixed thereto, and as illustrated the wheel is shown in a median position, between its positions of maximum jounce and rebound.

The front part 17 of the mudguard protecting the wheel 14, which front part is incorporated in or forms part of the structure of the cab 18 of the vehicle, comprises an inclined, upwardly extending, portion 21 and a generally horizontally extending portion 22. The part 19 of the mudguard, which is supported by the chassis of the vehicle, is somewhat arcuate in configuration and is provided with a flexible mudflap 23. The parts 17 and 19 of the mudguard are provided at their outermost edges with inwardly directed flange formations as indicated at 24 in Figure 3.

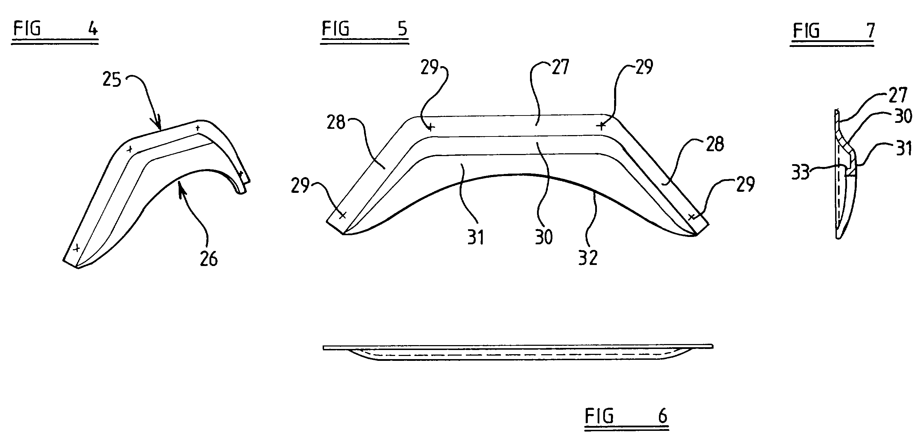

To the mudguard is secured a shielding device which is shown in situ in Figures 2 and 3 and in isolation in Figures 4 to 7. The shielding device comprises an attachment portion 25 and a shield portion 26, the attachment portion 25 comprising a central portion 27 and, at the ends of the part 27, downwardly inclined parts 28. The parts 27, 28 of the attachment portion 25 are in the form of a flange able to lie in face-to-face abutment with the outer face of the inwardly directed flange formation at the end of the upper part of the mudguard assembly comprising the parts 17, 19. The attachment portion is securable to the mudguard flange by fasteners at positions indicated, for example, at 29. Nuts and bolts may be used as such fasteners, or quick-release fasteners of, for example, the type requiring a quarter-turn only of a fastening element to effect securement and release.

The shield portion 26 of the shielding device extends, when secured to a vehicle, generally outwardly and downwardly from the attachment portion 25 of the device. More specifically, the shield portion comprises an outwardly and downwardly inclined portion 30 which extends from the parts 27 and 28 of the attachment portion but which is of smaller extent towards the lowermost ends of the latter parts, and a portion 31 of which the greatest part extends generally parallel to the portion 27 but which towards the lowermost ends of the parts 28 is tapered to approaches such ends. The portion 31 has a lower edge 32 which as seen in Figures 3 and 7 is provided with an inwardly turned lip 33. The lower edge 32 does not extend lower than a line such that when the wheel is in at least a mid-region of its range of travel upwards and downwards relative to the vehicle, and preferably its highest (maximum jounce) position, steering movement of the wheel is not inhibited by the shield portion. The contour of the lower edge 32 is, in the central region thereof, an arc of radius of the same order as that of the periphery 20 of the wheel 14 and, outwardly therefrom, progressively increasing radius and then reverse curves to provide a visually-attractive approach to the ends of the device.

The portion 31 of the device may be offset by a distance of the order of 10mm to 50mm from the attachment portion 27 of the device so that when fitted to a vehicle the device extends by about that distance outwardly beyond the boundary of the mudguard. For most commercial vehicles, such outward extension of the shielding device will not result in its extending beyond the legally-permitted dimensions of the vehicle. The device is fitted to the vehicle so that the central region of the portion 31 is approximately level with or slightly above the top part of the periphery 20 of the wheel when the wheel is in its mid-travel position as illustrated, although in practice some variation from this position is possible, for example up to about 25mm upwardly or downwardly. It will be appreciated that many commercial vehicles have air suspension incorporating ride height controlling devices, so that the mean relative position of wheel and shielding device is maintained despite changes in vehicle loading.

The device preferably is made of a deformable but shape-retaining material, eg a plastics or rubber-like material.

A device in accordance with the invention fitted as above described provides a significant reduction in emission of spray from the wheel with which it is associated, when the vehicle is travelling in wet conditions, without interfering with the steering and suspension movement of the wheel relative to the vehicle. The inturned lip 33 at the lowermost edge of the portion 31 of the device acts as a water-retaining formation and as the lip 33 extends to both the foremost and rearmost ends of the portion 31 water dripping therefrom tends to run down the vehicle's mudguard rather than fall onto the wheel to be thrown up again by the wheel. Further, the lip assists in rigidifying the device so that it retains its shape as does the fact that the portion 31 is offset from the attachment position 27.

In the embodiment of device described above, the attachment portion has a generally straight part 27 and inclined parts 28 at the ends of the part 27. Such a configuration is suitable for application to many commercial vehicles, but it will be appreciated that other configurations could be adopted to be more suitable for use with vehicles having mudguards of other shape than that illustrated. For example, the device could have an attachment portion of generally arcuate configuration and a shield portion whose upper part follows such configuration.

The features disclosed in the foregoing description, or the following claims, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A shielding device for a steerable wheel (14) of a vehicle, the device comprising an attachment portion (25) adapted to be secured to an edge of a mudguard (17, 19) for the wheel and a shield portion (26) extending from the attachment portion (25) and adapted to inhibit lateral emission of spray at an upper part of the wheel (14) while providing clearance for steering movement of the wheel.

2. A motor vehicle having a shielding device according to Claim 1 secured to a mudguard (17, 19) of a wheel (14) of the vehicle.

3. A vehicle according to Claim 2 wherein the shield portion (26) comprises a lower edge which does not extend lower than a line which does not inhibit steering movement of the wheel when the wheel is in a mid-region of its range of its permitted upwards and downwards movement relative to the vehicle structure.

4. A vehicle according to Claim 3 wherein said lower edge (32) of the shield portion (26) has a central portion which lies generally level with an upper part of the periphery (20) of the wheel, when the wheel is at least in said mid-region of its range of movement relative to the vehicle structure, and end portions of said lower edge provide a progressively increasing clearance from the periphery (20) of the wheel with increasing distance from said central portion.

5. A vehicle according to Claim 4 wherein said lowermost edge (32) of the shield portion is generally arcuate in said central portion having a radius of curvature generally similar to the radius of the wheel, and is of increasing radius of curvature towards said end portions.

6. A device or vehicle according to any one of the preceding claims wherein said shield portion (26) of the device is offset from said attachment portion (25) thereof, so that said shield portion is spaced laterally outwardly of the vehicle from the edge of the vehicle's mudguard.

7. A device or vehicle according to any one of the preceding claims wherein said shield portion includes, along its lower edge, a water-collecting formation (33) for collection of water draining down the interior of the shield portion.

8. A device or vehicle according to Claim 7 wherein said water-collecting formation (33) finishes at end portions of the device forwardly and rearwardly of the periphery (20) of the wheel of the vehicle.

9. A device or vehicle according to any one of the preceding claims wherein said attachment portion (25) of the device comprises a flange formation which lies in face-to-face relation with a surface facing laterally outwardly of the vehicle or an inwardly directed flange at the edge of the mudguard, for securement thereto by fasteners.

10. A device according to any one of the preceding claims made of a deformable but shape-restoring material such as a plastics or rubber-like material.
